# EUROPEAN PATENT APPLICATION

(11) **EP 2 770 237 A1**
(43) Date of publication of application: **27.08.2014**
(21) Application number: 14156663.8
(22) Date of filing: 25.02.2014
(51) Int. Cl.: F16K 31/60

(54) **Water mixer**

(30) Priority: 26.02.2013 IT VI20130041
(71) Applicant: CEADESIGN SRL, 36022 Cassola (VI) (IT)
(72) Inventor: Malasorti, Natalino, 36012 ASIAGO (VI) (IT)
(74) Representative: Bonini, Ercole

(57) **Abstract**

Water mixer (1) comprising: a manifold body (2) provided with a first hot water inlet way (3), a second cold water inlet way (4) and a mixed water outlet way (5) configured in such a way that it can be connected to a dispenser tube; a mixing cartridge (6) arranged in the manifold body (2) and comprising a hollow body (7) communicating with the inlet ways (3, 4) and the outlet way (5) and housing a shutter (8) that defines a longitudinal axis (X) and is provided with a manoeuvring shaft (9); means (10) for operating the mixer (1) operatively connected to the manoeuvring shaft (9) and configured so as to rotate the shutter (8) around the longitudinal axis (X) in order to adjust the temperature of the mixed water being dispensed and to incline the manoeuvring shaft (9) with respect to the longitudinal axis (X) to adjust the flow rate of the mixed water being dispensed. The operating means (10) comprise: a rotary knob (12) coupled with the manifold body (2) through connection means (18) and configured in such a way that it defines a rotation plane (α) that is orthogonal to the longitudinal axis (X) of the shutter (8); a manoeuvring rod (14) defining a longitudinal direction (Y), connected to the manoeuvring shaft (9) through coupling means (16) and comprising two manoeuvring ends (15) that project from the knob (12) and are slidingly associated with guide means (17) belonging to the knob (12). The guide means (17) comprise one pair of holes (17a) made so that they pass through the knob (12) and are coaxial to each other and aligned according to a longitudinal direction (Ya) that is parallel to the rotation plane (α) of the rotary knob (12) and coincides with the longitudinal direction (Y) defined by the manoeuvring rod (14). Each one of the holes (17a) is suited to slidingly house one of the manoeuvring ends (15) of the manoeuvring rod (14).

## Description

The invention concerns a mixer for hot and cold water, suited to be used in taps and valve systems.

It is known that the water mixers that are normally used in taps and valve systems mix together hot and cold water coming from a water supply network and allow the mixed water to be delivered to the user at the temperature and with the flow rate desired by the latter.

The mixers of the known type available on the market, even if in different shapes and construction sizes, substantially comprise a manifold body whose inlet is suited to be connected to a water network delivering hot and cold water and whose outlet is suited to be connected to a dispenser tube, inside which there is a mixing cartridge suited to mix hot and cold water and suited to be manoeuvred by means of a manoeuvring lever.

In particular, using the manoeuvring lever it is possible to rotate and incline the manoeuvring shaft of the cartridge in such a way as to adjust, respectively, the temperature and the flow rate of the mixed water that is being dispensed. The manoeuvring lever is made in a single body or in several elements permanently and rigidly connected to one another and is supported by the manifold body and connected to the manoeuvring shaft of the cartridge.

A recognized drawback posed by the mixers of the known type is due to the fact that when the mixer is arranged so that it can deliver the maximum flow rate of mixed water the manoeuvring lever projects from the wall where it is installed more than when the mixer does not dispense any water.

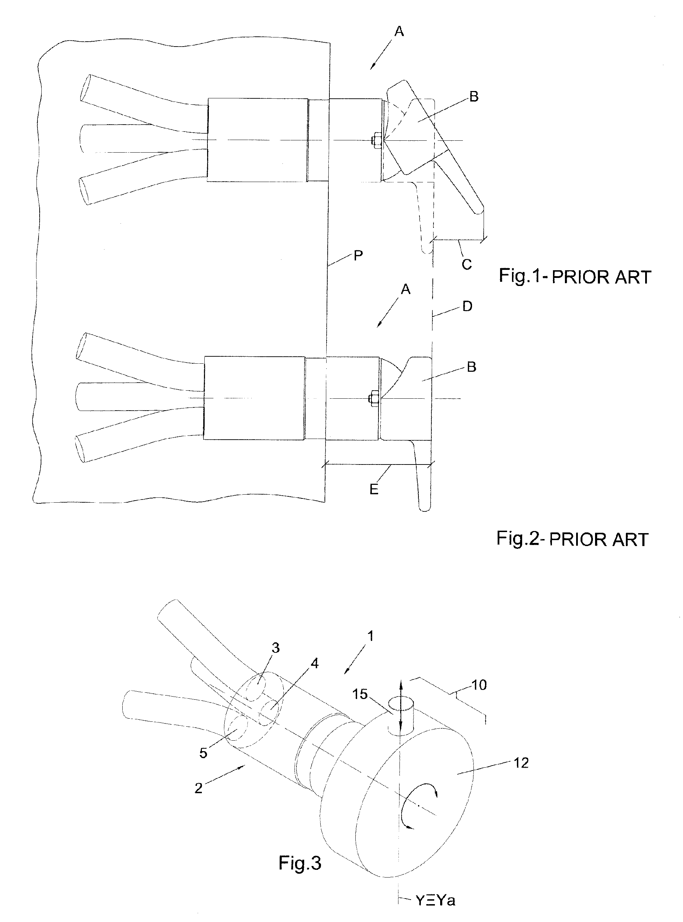

A situation of the type described above is illustrated in Figure 1, in which it is possible to observe a mixer A of the known type applied to the wall P, in which the manoeuvring lever B is arranged in the configuration of maximum delivery and projects by the additional distance C from the plane D that defines its maximum projection E when the mixer is arranged in the configuration illustrated in Figure 2, in which it does not dispense any water.

This causes, as a first drawback, a limitation to the freedom of movement of the user, especially when the mixer is installed inside shower cubicles where, as is known, space is generally rather limited.

Furthermore, in these situations the body of the user may easily come into contact with the manoeuvring lever and change its position, with the further drawback of accidentally varying the temperature and flow rate of the mixed water that is dispensed.

In the case where this change of position of the manoeuvring lever should suddenly place the mixer in the configuration of maximum flow rate and maximum water temperature, this may also cause dangerous scalds to the user.

In other cases the contact with the projecting manoeuvring lever may cause bruises or injuries to the user.

The mixer described in the patent document EP 0 818 647 is known, which comprises a single manoeuvring lever suited to be gripped by the operator and connected to the mixing cartridge, which performs a first rotation movement around a first rotation axis that is coaxial with the mixing cartridge to adjust the temperature of the dispensed water and a second rotation movement around a second rotation axis that is orthogonal to the first rotation axis in order to adjust the flow rate.

As the two rotation axes are orthogonal to each other, during rotation around the second rotation axis the manoeuvring lever is shifted according to a direction that is parallel to the direction defined by the first rotation axis and therefore changes the distance by which it projects from the mixing cartridge and therefore from the mixer body and in general from the surface of the supporting structure of the mixer itself.

Therefore, the mixer described in the above mentioned patent document poses the same drawback, already observed and described above, which lies in that during the adjustment of the flow rate the manoeuvring lever modifies the distance by which it projects from the mixer body or from the wall to which it is applied.

The same drawback can be observed also in the mixer described in the patent document US 2008/0202611, which comprises a manoeuvring lever that performs a first rotation movement around a first axis of rotation to change the temperature of the water being dispensed and a second rotation movement around a second rotation axis, orthogonal to the first rotation axis, to vary the flow rate.

Also the mixer described in the patent document DE 34 44 123 is known, which comprises a single manoeuvring lever suited to be gripped by the operator and connected to the mixing cartridge, which performs a first rotation movement according to a rotation axis that is coaxial with the mixing cartridge to mix hot and cold water and a second lifting and lowering movement that is orthogonal to the rotation plane to adjust the flow rate.

During the lifting and lowering movement the position of the manoeuvring lever changes according to the direction defined by the rotation axis and therefore the already described drawback arises, which lies in that the manoeuvring lever changes the distance by which it projects from the mixer body and therefore from the surface of the supporting structure to which the mixer is applied.

In all of the documents mentioned above, the drawback represented by the fact that during its movement the manoeuvring lever changes the distance by which it projects from the mixer body, and therefore from the surface of the structure that supports it, derives from the fact that the mixers described in the above mentioned patent documents, and in general all the known mixers, use a single manoeuvring lever to adjust both the temperature and the flow rate of the water that is being dispensed, and therefore it is necessary for said manoeuvring lever to be able to move according to directions lying on planes that are incident on each other, and according to the directions of movements defined by the shutter of the mixing cartridge that, in fact, lie on planes that are incident on each other.

The present invention intends to overcome the limitations and drawbacks mentioned above.

In particular, it is the main object of the invention to provide a mixer equipped with operating means for adjusting the temperature and the flow rate of the mixed water that is dispensed, wherein said operating means do not have moving parts that project by variable distances with respect to the surface where the mixer is installed.

It is another object of the invention to provide a mixer equipped with operating means that, compared to the operating means of the mixers of the known type, are less likely to be moved from the position in which they have been arranged, due to accidental contact.

The objects mentioned above are achieved by a water mixer according to the main claim, to which reference is made.

The dependent claims describe further characteristics of the mixer of the invention.

Advantageously, the mixer that is the subject of the invention operates more reliably than the known mixers, as it guarantees more stability of the dispensing positions in which it is arranged.

The objects and advantages illustrated above are highlighted in greater detail in the description of the mixer of the invention that is provided here below with reference to the attached drawings, wherein:
- Figures 1 and 2 show a side view of a mixer of the known art, installed and arranged in two different operating positions;
- Figure 3 shows an axonometric view of the mixer that is the subject of the invention;
- Figure 4 shows an exploded axonometric view of the mixer of the invention represented in Figure 3;
- Figure 4a shows a detail of Figure 4;
- Figure 5 shows the mixer of Figure 4 partially assembled;
- Figure 5a shows a detail of Figure 5;
- Figures 6 and 7 show each a longitudinal sectional view of the mixer of Figure 3 in two different operating positions;

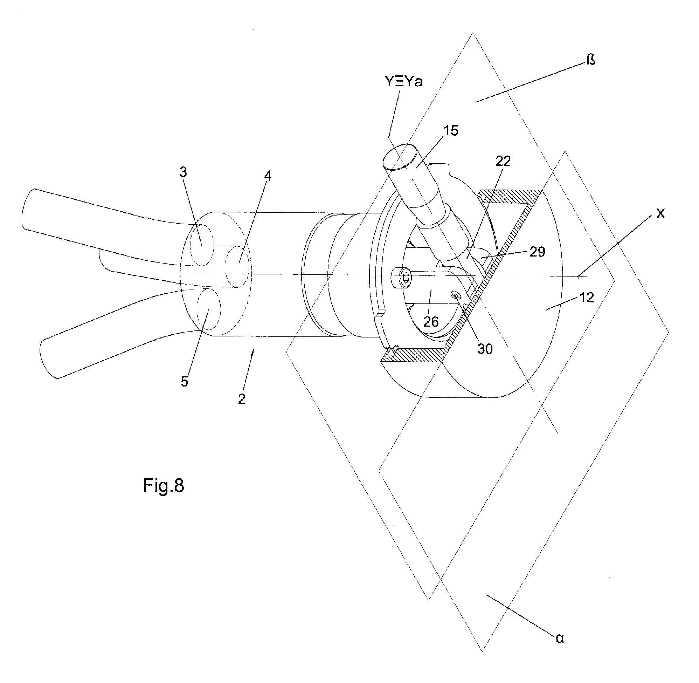

- Figure 8 shows a partial sectional view of the mixer of Figure 3;
- Figures 9, 9a, 9b, 9c and 9d show different operating positions of the mixer of Figure 3 in front view.

The mixer that is the subject of the invention can be seen in the axonometric views of Figures from 3 to 5, where it is indicated as a whole by **1.**

It can be observed that it comprises a manifold body **2** suited to be built in a wall **P,** provided with a first hot water inlet way **3** and with a second cold water inlet way **4** that are configured in such a way that they can be connected to a water supply network not represented in the figures.

The manifold body is also provided with a mixed water outlet way **5** that is configured in such a way that it can be connected to a dispenser tube that is not represented, either.

A mixing cartridge indicated as a whole by **6** and of the type known per se is arranged inside the manifold body **2** and comprises a hollow body **7** communicating with the inlet ways **3, 4** and the outlet way **5,** wherein said hollow body houses a shutter **8** defining a longitudinal axis of rotation **X** and provided with a manoeuvring shaft **9.**

It is important to underline that the mixing cartridge **6** is fixed inside the manifold body **2** through fixing means of various types belonging to the known art, like for example threads and counter threads, ring nuts or other systems. Means for operating the mixer **1** are also provided, said means being indicated as a whole by **10** and cooperating with the manoeuvring shaft **9** in order to:
- rotate the manoeuvring shaft **9** and therefore the shutter **8** around the longitudinal axis **X** to adjust the temperature of the mixed water that is being dispensed;
- incline the manoeuvring shaft **9** with respect to the longitudinal axis **X** in order to move the shutter **8** along the axis **X** and adjust the flow rate of the mixed water that is being dispensed.

According to the invention, the operating means **10** comprise:
- a rotary knob **12** suited to adjust the temperature of the mixed water being dispensed and coupled with the manifold body **2;**
- a manoeuvring rod **14** suited to adjust the flow rate of the mixed water being dispensed, connected to the manoeuvring shaft **9** through coupling means **16** and comprising manoeuvring ends **15** that project from the rotary knob **12** and are slidingly associated with guide means **17** belonging to the knob **12** itself.

In particular it can be observed, also with reference to the sectional views shown in Figures from 6 to 8, that the knob **12** is coupled with the manifold body **2** through bayonet connection means indicated as a whole by **18,** which comprise:
- a shaped flange **19** provided with a plurality of projections **19a** and of through holes **19b** that house fixing means, preferably screws **19c,** suited to fix the shaped flange **19** to an annular edge **2a** of the manifold body **2;**
- a counter flange **20** obtained in the rotary knob **12** and provided with a plurality of recesses **20a** matching the projections **19a** and communicating with an annular groove **20b** that is undercut in the body of the knob **12.**

In a different embodiment of the invention, the projections may be created directly in the annular edge of the manifold body, in which case there will be no shaped flange and no corresponding fixing means.

Furthermore, the latter may be different from screws.

In order to couple the knob **12** with the manifold body **2,** each projection **19a** of the shaped flange **19** is inserted in a corresponding recess **20a** in the counter flange **20** of the knob **12** and then the latter is rotated in such a way as to make the projections **19a** slide along the annular groove **20b,** thus coupling the rotary knob **12** with the manifold body **2.**

Once the coupling operation has been completed, the knob **12** can be freely rotated clockwise or anticlockwise.

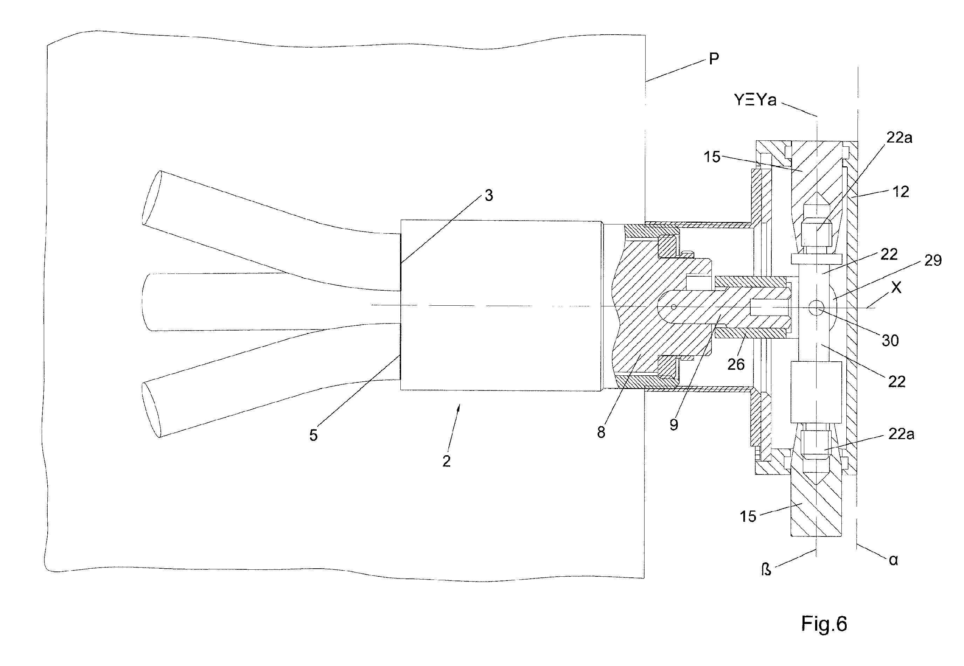

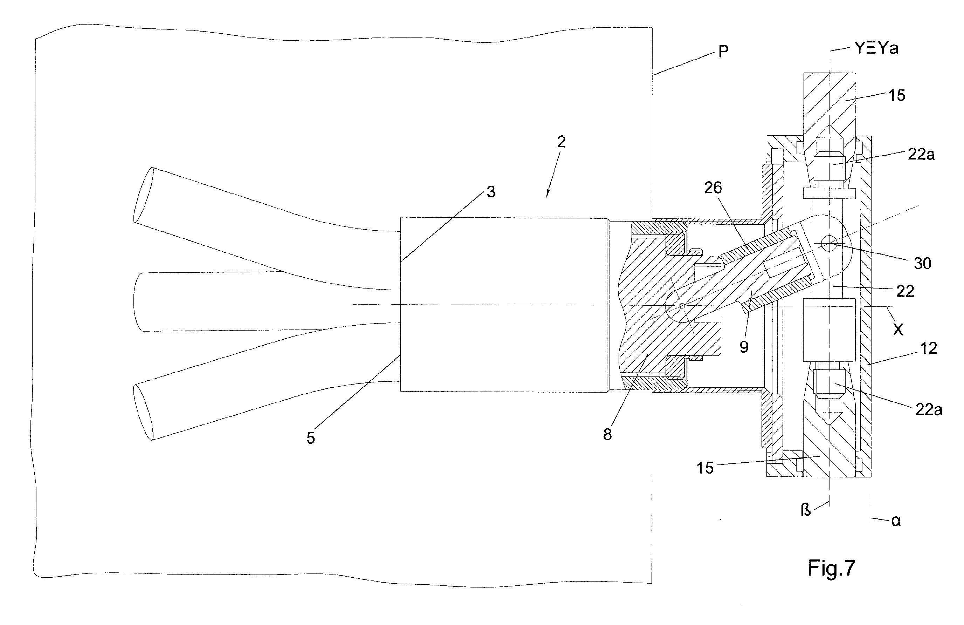

In this way a plane **α** of rotation of the knob **12** is defined, which is orthogonal to the longitudinal axis **X** of the shutter **8** and parallel to the plane of the wall **P** where the manifold body **2** is incorporated, as shown in Figures 6 and 7.

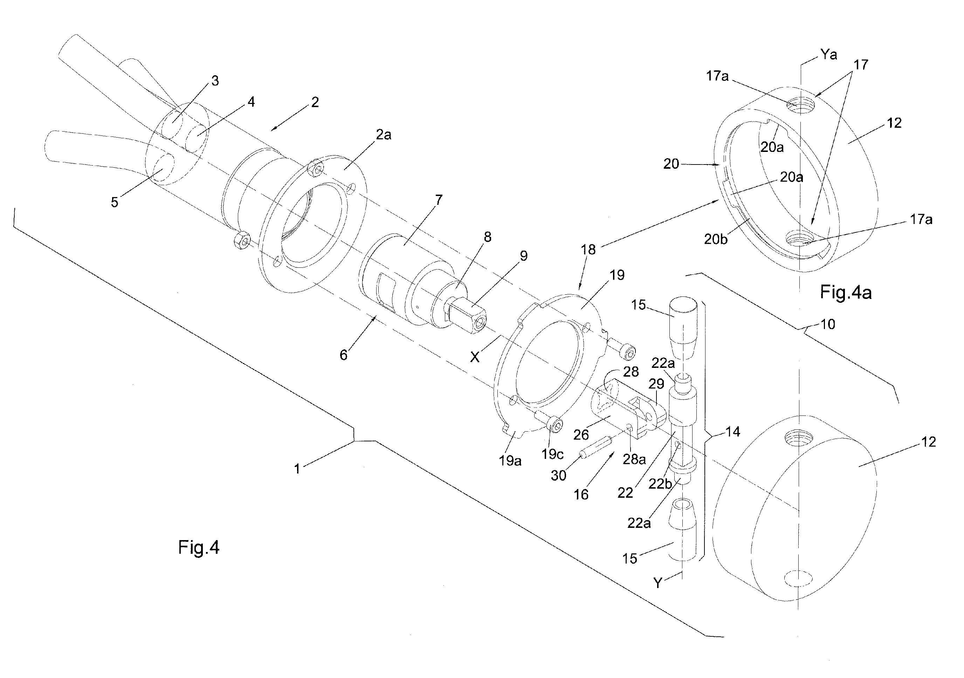

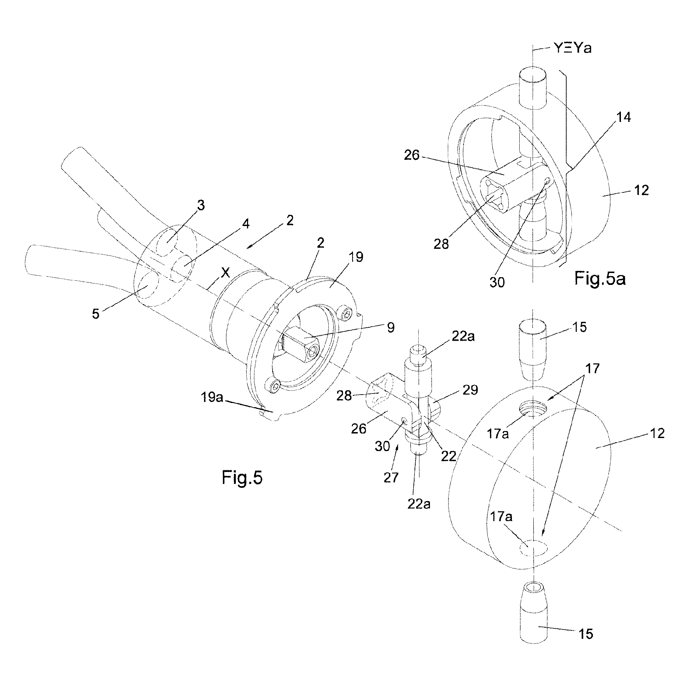

The manoeuvring rod **14** defines a longitudinal axis **Y** orthogonal to the longitudinal axis **X** of the shutter **8** and comprises a centre body **22** visible in particular in Figures 4, 5 and 5a which, in the intermediate position, supports the means **16** for coupling with the manoeuvring shaft **9** and at each end is provided with means **22a** for connection with a corresponding manoeuvring end **15.**

The latter is coupled with the guide means **17** comprising a pair of holes **17a** that are coaxial and aligned with each other, made in such a way that they pass through the knob **12** in opposing positions, wherein each one of said holes slidingly houses one of the two manoeuvring ends **15** of the manoeuvring rod **14.**

In this way the direction **Ya** of alignment of the holes **17a** defines also the direction of movement of the manoeuvring rod **14** and coincides with the longitudinal direction **Y** defined by the latter.

It can be observed in the drawings that the direction **Ya** of alignment of the holes **17a** is parallel to the plane **α** of rotation of the rotary knob **12** that can be observed in Figures 6 and 7 and is thus orthogonal to the longitudinal axis **X** of the shutter **8,** said axis **X** being, as already explained, orthogonal to the plane **α.**

Essentially, therefore, the movement of the manoeuvring rod **14** takes place along the direction **Ya** of alignment of the holes **17a,** parallel to the plane **α** on which the rotary knob **12** rotates.

From another point of view, we might say that the rotary knob **12** rotates on a plane **α** that is parallel to a plane **β** containing the coinciding directions **Ya** of alignment of the holes **17a** constituting the guide means **17** and **Y** of the manoeuvring rod **14.**

Regarding, in particular, the coupling means **16** for coupling the manoeuvring rod **14** with the manoeuvring shaft **9** of the shutter **8,** it can be observed that they comprise a joining sleeve **26** provided with a shaped housing **28** that slidingly houses the manoeuvring shaft **9** of the shutter **8,** since said sleeve **26** has one end connected to the centre body **22** of the manoeuvring rod **14** through a hinge element **27** that can be observed in Figure 5.

In particular, it can be observed that the manoeuvring shaft **9** of the shutter **8** and the shaped housing **28** of the joining sleeve **26** preferably but not necessarily have square cross section.

It is however essential that the manoeuvring shaft **9** and the shaped housing **28** have matching profiles in any shape, provided that their shape allows the transmission of rotation from the shaped housing **28** to the manoeuvring shaft **9.**

Concerning the hinge element **27,** it comprises a fork **29** obtained in the joining sleeve **26** that houses the centre body **22** of the manoeuvring rod **14** and a rotation pin **30** that passes through corresponding holes **22b** and **28a** respectively made in the centre body **22** and in the fork **29.**

In practice, to install the mixer **1** starting from the condition in which the parts making it up are separate, as shown in Figure 4, first of all the centre body **22** of the manoeuvring rod **14** is mounted on the joining sleeve **26,** thus obtaining the hinge element **27,** as shown in Figure 5.

The unit, assembled as described above, is then arranged inside the knob **12,** as shown in Figure 5a, so as to obtain the manoeuvring rod **14** by connecting to it each manoeuvring end **15** and after inserting each manoeuvring end **15** in the corresponding through hole **17a** belonging to the guide means **17.** Once the assembly has been completed, each manoeuvring rod **14** is integrally connected to the rotary knob **12,** with respect to which it can slide along the direction **Ya** of alignment of the through holes **17a.**

The shaped flange **19** is then fixed to the manifold body **2** and, through the bayonet coupling defined by the insertion of the projections **19a** of the shaped flange **19** in the recesses **20a** and in the annular groove **20b,** the rotary knob **12** is coupled with the manifold body **2,** after fitting the manoeuvring shaft **9** of the shutter **8** in the joining sleeve **26.**

At this point, the assembly of the mixer **1** has been completed.

It can be observed that the rotary knob **12** and the manoeuvring rod **14** are separable elements that are physically independent of each other and work synergically to operate the manoeuvring shaft **9** of the shutter **8.**

In particular, when the manoeuvring rod **14** is displaced along the direction Y by exerting pressure against its manoeuvring ends **15,** it acts directly on the manoeuvring shaft **9** through the joining sleeve **26** and moves it angularly from the position aligned along axis **X** shown in Figure 6 to the inclined position with respect to axis **X** shown in Figure **7****,** and vice versa, in order to adjust the flow rate of the mixed water being dispensed.

When, instead, the rotary knob **12** is set rotating, it sets rotating also the manoeuvring rod **14** that in turn, through the joining sleeve **26,** rotates the manoeuvring shaft **9** of the shutter **8** in order to adjust the temperature of the mixed water being dispensed.

Essentially, therefore:
- the flow of mixed water being dispensed is adjusted through the linear displacement of the manoeuvring rod **14** along the direction **Ya** orthogonal to the axis **X** of the shutter **8;**
- the temperature of the mixed water being dispensed is adjusted through the rotation of the rotary knob **12** according to a plane α orthogonal to the axis **X** of the shutter **8;**
- the direction **Y** defined by the manoeuvring rod **14** and the direction **Ya** of displacement of the manoeuvring rod **14** defined by the guide means **17** of the manoeuvring rod **14** itself are coincident and belong to a plane **β** that is parallel to the plane α of rotation of the rotary knob **12;**
- the axis **X** defined by the manoeuvring shaft **9** is orthogonal to both planes α and **β.**

In practice, for the mixer 1 that is the subject of the invention there are many possible operating positions, some of which, specifically five of which are shown in Figures from 9 to 9d by way of example.

The position of the ends **15** of the manoeuvring rod **14** with respect to the perimeter edge of the rotary knob **12** defines the flow rate of the water dispensed by the mixer, in particular:

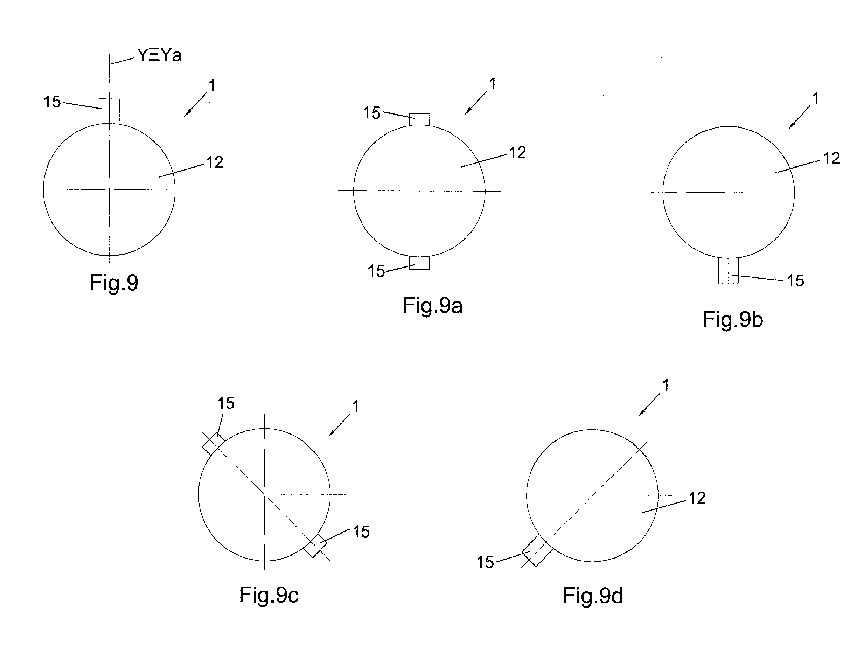

- Figure 9 corresponds to the front view shown in Figure 7 and shows the condition of maximum flow rate of the water being dispensed;
- Figures 9a and 9c show conditions of intermediate flow rate of the water being dispensed;
- Figures 9b and 9d correspond to the front view of Figure 6 and show the condition in which no water is dispensed.

The angular position of the rotary knob **12** defines, instead, the temperature of the mixed water being dispensed, and in particular:
- Figure 9c shows the position corresponding to the maximum temperature of the mixed water being dispensed;
- Figure 9d shows the position corresponding to the minimum temperature of the mixed water being dispensed;
- Figures 9, 9a, 9b show positions corresponding to intermediate temperatures of the mixed water being dispensed.

Obviously, there are many further dispensing positions, intermediate between those represented and described herein, which are obtained by varying the distance of the manoeuvring ends **15** of the manoeuvring rod **14** with respect to the rotary knob **12** as well as the angular rotation of the latter.

It is important to observe that all the different flow rate conditions of the dispensed water are achieved through the linear displacement of the manoeuvring rod **14** along the direction **Y** caused by the pressure exerted on the manoeuvring ends **15** which takes place within the thickness of the knob **12.**

In this way, the mixer **1** of the invention, in any operating or resting position, always projects from the wall **P** in which it is installed by the same distance, differently from that which happens for the mixers **A** of the known art illustrated in Figures 1 and 2.

According to the above, it can thus be understood that the mixer that is the subject of the invention achieves all the set objects.

In particular, differently from the mixers of the known art, the mixer that is the subject of the invention does not include parts that project from the wall where it is installed by distances that vary according to the operating conditions.

This improves the conditions of use of the mixer, reducing any risk of accidental contact that may modify its dispensing conditions or may cause damage to the user.

Finally, the sliding linear movement of the manoeuvring rod **14** within the outline of the rotary knob **12** considerably reduces the risk of accidental manoeuvres.

Obviously, during the construction stage the mixer that is the subject of the invention can be subjected to changes and variants that are neither illustrated in the drawings nor described herein.

In particular, the mixer that is the subject of the invention and the parts that make it up can be constructed with shapes and sizes different from those represented and described herein, in order to improve the operation of the mixer and make it more economical to construct.

It is understood, however, that said variants and modifications must all be considered protected by the present patent, provided that they fall within the scope of the following claims.

## Claims

1. Water mixer (1) comprising:
- a manifold body (2) provided with a first hot water inlet way (3) and with a second cold water inlet way (4) configured so that they can be connected to a water supply network, and with a mixed water outlet way (5) configured so that it can be connected to a dispenser tube;
- a mixing cartridge (6) arranged in said manifold body (2) and comprising a hollow body (7) communicating with said inlet ways (3, 4) and outlet way (5) and housing a shutter (8) defining a longitudinal axis (X) and provided with a manoeuvring shaft (9);
- means (10) suited to operate said mixer (1), operatively connected to said manoeuvring shaft (9) and configured so as to rotate said shutter (8) around said longitudinal axis (X) in order to adjust the temperature of the mixed water being dispensed and to incline said manoeuvring shaft (9) with respect to said longitudinal axis (X) in order to adjust the flow rate of the mixed water being dispensed,
**characterized in that** said operating means (10) comprise:
- a rotary knob (12) coupled with said manifold body (2) through connection means (18) and configured in such a way that it defines a rotation plan (α) that is orthogonal to said longitudinal axis (X) of said shutter (8);
- a manoeuvring rod (14) defining a longitudinal direction (Y), connected to said manoeuvring shaft (9) through coupling means (16) and comprising two manoeuvring ends (15) projecting from said knob (12) and slidingly associated with guide means (17) belonging to said knob (12), said guide means (17) comprising one pair of holes (17a) made so that they pass through said knob (12) and are coaxial to each other and aligned according to a longitudinal direction (Ya) parallel to said rotation plane (α) of said rotary knob (12) and coinciding with said longitudinal direction (Y) defined by said manoeuvring rod (14), each one of said holes (17a) being suited to slidingly house one of said manoeuvring ends (15) of said manoeuvring rod (14).

2. Mixer (1) according to claim 1), **characterized in that** said means (18) connecting said knob (12) to said manifold body (2) are of the bayonet type.

3. Mixer according to claim 2), **characterized in that** said bayonet connection means comprise:
- a shaped flange (19) configured in such a way that it can be associated with said manifold body (2) and provided with a plurality of projections (19a);
- a counter flange (20) obtained in said knob (12) and comprising a plurality of recesses (20a) communicating with an annular groove (20b) undercut in the body of said knob (12) so as to accommodate said projections (19a).

4. Mixer according to claim 3), **characterized in that** said shaped flange (19) is provided with through holes (19b) for fixing means (19c) suited to fix said shaped flange (19) to an annular edge (2a) of said manifold body (2).

5. Mixer (1) according to any of the preceding claims, **characterized in that** said manoeuvring rod (14) comprises a centre body (22) that in the intermediate position supports said means (16) for coupling with said manoeuvring shaft (9) and at each end is provided with means (22a) for connection to one of said manoeuvring ends (15) that are housed in said guide means (17).

6. Mixer (1) according to claim 5), **characterized in that** said coupling means (16) comprise a joining sleeve (26) provided with a shaped housing (28) that slidingly houses said manoeuvring shaft (9) of said shutter (8) and having one end connected to said centre body (22) through a hinge element (27).

7. Mixer (1) according to claim 6), **characterized in that** said hinge element (27) comprises:
- a fork (29) created at one end of said joining sleeve (26) on the opposite side of said shaped housing (28) and suited to accommodate said centre body (22) of said manoeuvring rod (14);
- a rotation pin (30) that passes through corresponding holes (28a, 22b) made in said fork (29) and in said centre body (22).
